(19) Europäisches Patentamt
European Patent Office
Office européen des brevets

(11) Publication number: **0 081 308**
**A1**

(12) **EUROPEAN PATENT APPLICATION**

(21) Application number: 82306128.8

(22) Date of filing: 17.11.82

(51) Int. Cl.³: G 02 F 1/133

(30) Priority: 04.12.81 GB 8136680

(43) Date of publication of application:
15.06.83 Bulletin 83/24

(84) Designated Contracting States:
CH DE FR IT LI NL

(71) Applicant: The Secretary of State for Defence in Her Britannic Majesty's Government of The United Kingdom of Great Britain and Northern Ireland Whitehall
London SW1A 2HB(GB)

(72) Inventor: McDonnell, Damien Gerard
Flat 10 Eaton Hurst Pound Bank Road
Malvern Worcestershire(GB)

(74) Representative: Edwards, John Brian et al,
Procurement Executive Ministry of Defence Patents 1 A (4), Room 2014 Empress State Building Lillie Road
London SW6 1TR(GB)

(54) **Liquid crystal display devices.**

(57) A liquid crystal display device comprises a layer (8 or 9) of a liquid crystal material between two glass slides (3, 4 or 4, 5). These slides carry electrode structures (10, 11 or 12, 13) for applying an electric field across the liquid crystal layer. One or both electrode structures are formed of a fixed legend (10a, 11a or 12a, 13a) and a background electrode (10b, 11b or 12b, 13b) spaced apart by a small gap e.g. less than 10 µm. This allows the structure to be used as two separate electrodes or a single sheet electrode. A different fixed legend is on each slide. Thus for a single layer of liquid crystals two different legends (W, X or Y, Z) may be displayed one at a time. Two or more devices (1, 2) may be connected optically in series to display four or more different legends. Dyes may be added to the liquid crystal material. The display may operate using the twisted nematic, the phase change, the Freidericksz effect, or dynamic scattering type of device.

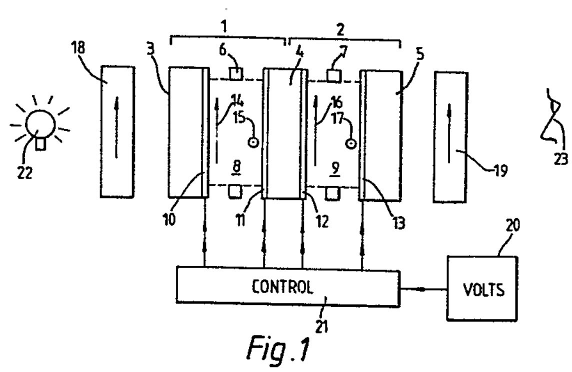


Fig.1

EP 0 081 308 A1

Croydon Printing Company Ltd.

LIQUID CRYSTAL DISPLAY DEVICES (ELECTRODE PATTERN)

This invention relates to liquid crystal display devices.

Such devices commonly comprise a thin layer of a liquid crystal material contained between two glass slides. Electrode structures on the inner faces of the slides allow an electric field to be applied across the layer thickness. The combination of liquid crystal layer, two slides, and electrode structure may be termed a liquid crystal cell. On application of a suitable voltage to the electrodes the molecules of liquid crystal material between the electrodes are re-ordered e.g. to lie parallel to the applied field, the ON state. Removing the electric field allows the molecules to relax back to their OFF state.

This molecular re-ordering under the control of an electric field forms the basis for a number of known types of liquid crystal display (L.C.D.) devices. For example twisted nematic, phase change, dynamic scattering etc.

The electrode structures can be a uniform sheet electrode covering both slides so that the whole display changes between OFF and ON states. This is used for example in light shutters. Another electrode structure comprises spaced strips, those on one slide being orthogonal to those on the other slide. These strips form a matrix of intersections that can be separately addressed e.g. in a multiplexed manner to display alpha numerics bar graphs, etc. Another electrode structure is in the form of seven bars arranged in a seven bar numeric format. By applying voltages to selected bars the numbers 0 to 9 are displayed. Another electrode structure is used for displaying fixed legends, etc. letters, numbers, shapes or symbols. In this case one or both electrodes have the shape of the desired letter etc. The whole display is a uniform colour in the OFF state and in the ON state the fixed legend is displayed.

A variation of this fixed legend is described in SID 80 Digest pages 194/5. In this a symbol e.g. the letter 'F' is formed on electrode material on one slides. Surrounding this letter 'F' and separated by a large gap is a background electrode on the same slide. The other slide has a plain sheet electrode. This arrangement gives the following four displays:- (i) whole display dark, the OFF state; (ii) the letter F displayed in a light shade on a dark background by applying a voltage to the F-shaped electrode; (iii) the letter F displayed as dark on a light background by applying a voltage to the background electrode; (iv) a dark outline of the letter F on a light remainder of display by applying a voltage to the F-shaped and background electrodes. In this latter case only the area of liquid crystal in the area between F-shaped and background electrode receives no voltage and is therefore in the dark, OFF, state. The feature of this fixed legend display is the display of the same single legend in three forms.

According to this invention a liquid crystal display device comprises a layer of a liquid crystal material contained between two slides, at least one of which is transparent, and electrode structures on both slides, characterised by at least one fixed legend electrode and a background electrode on at least one slide spaced sufficiently close that collectively they may act as a single electrode or individually as shaped electrodes.

The gap between fixed legend and background electrode is sufficiently small that fringing field at the gap and coherence length of the liquid crystal material ensures liquid crystal molecule director re-orientation across the gaps. The gap may be less than 100 µm preferably less than 60 µm, typically 10 to 20 µm or less.

The electrode structures on both slides may have fixed legend and background electrodes. In this case the fixed legends and background electrodes are of different shape on each slide. Two differently shaped legends may thus be displayed separately.

Two or more devices may be arranged optically in series so that four or more fixed images may be observed.

Dyes may be incorporated into the liquid crystal material. For devices with two or more layers a different dye may be used in each layer. Dyes suitable for inclusion in liquid crystal materials are described in G.B. Patents Nos. 1,555,955, 2,001,940, and G.B. Patent Applications Nos. 81 23,186 and 82 05,153.

The device may operate in a transmissive mode or in a reflective mode with a reflector behind the rear slide.

The device may be arranged as a twisted nematic, phase change, Freedericksz effect, dynamic scattering, etc., type of device.

The invention will now be described, by way of example only, with reference to the accompanying drawings in which:-

Figure 1 is an exploded view of a two cell display device employing the twisted nematic effect;

Figures 2a, b, c, d, are views of the electrode patterns for the device of Figure 1;

Figure 3 is an exploded view of a two cell four colour device.

The device of Figure 1 comprises two display cells 1, 2 formed by three glass slides 3, 4, 5 spaced apart by glass spacers 6, 7. Between the slides 3, 4, 5 are two separate layers 8, 9 of a liquid crystal material typically 8 μm thick. The material may be a nematic material alone or with a small amount of cholesteric liquid crystal material to give a cholesteric pitch of more than four times layer thickness. A suitable material is E7 or E43 obtainable from B.D.H. Chemicals Ltd., Poole, Dorset. E7 has the formula

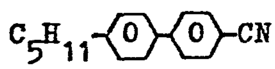 51% by weight

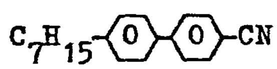 25% by weight eg CB 150.05%

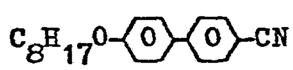 16% by weight

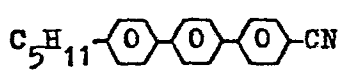 8% by weight

About 0.05% of C.B. 15 (B.D.H. Ltd.) may be added. CB 15 has the structure:-

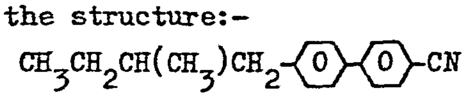

The faces of the slides 3, 4, 5 in contact with the liquid crystal materials are covered with a transparent indium tin oxide coating 10, 11, 12, 13. These coatings form electrodes and are shaped as indicated in Figures 2a, b, c, d. Each coating 10, 11, 12, 13 has the form of a legend electrode and its complementary or background electrode. The coating 10 is shown, for illustrative purposes only, as a letter W shaped electrode 10a and a background electrode 10b, separated from the W electrode by a narrow gap 14 e.g. of ~10 µm to electrically isolate the two electrodes. Narrower gaps may be used providing the production techniques e.g. of lithography are adequate to give reliable electrical isolation. Similarly coating 11 is shaped as a legend X electrode 11a and background electrode 11b; coating 12 is shaped as a legend Y electrode 12a and background electrode 12b; and coating 13 is shaped as a legend Z electrode 13a and background electrode 13b.

Prior to assembly the faces of the slides to be in contact with the liquid crystal material are given a known surface treatment. For example coating with a polymer e.g. PVA or polyimide and unidirectional rubbing with a soft tissue. On assembly the rubbing, or alignment, directions are orthogonal in each cell and the same in both cells; the alignment directions are indicated by arrows 14, 15, 16, 17.

Polarisers 18, and 19 are arranged either side the cells 1, 2 with their optical axis parallel to one another and to the rubbing directions 14, 16 on the optical input side of both cells 1, 2.

Each cell 1, 2 forms a twisted nematic cell which rotates plane polarised light through $90^{\circ}$ as it passes through the cell. Plain polarised light is rotated through $90^{\circ}$ providing the plane of incident light is parallel or perpendicular to an alignment direction.

A voltage supply 20 e.g. of 3 volts r.m.s. at 100 Hz is connected through control logic 21 to each legend electrode and each background electrode.

Light from a bulb 22 passes through the display to be seen by an observer 23.

Operation of the device is as follows:- voltages are selectively applied to the electrodes to separately display the letters W, X, Y, Z, either as dark legends on a bright background or vice versa.

To display a dark W on a bright background a voltage is applied to electrode 10a, and to electrodes 11a and 11b connected together. When connected together the legend X and its background act as a single sheet electrode. The effect of an applied field of 3 volts is to re-order the liquid crystal molecules between electrodes 10a and 11a, b to lie parallel to the applied field. These re-ordered molecules do not rotate plane polarised light but are transparent to all light. Thus light from the bulb is vertically polarised by the polariser 18 and passes through the re-ordered areas of layer 8 without rotation but is then rotated by $90^{o}$ on passing through the cell 2; it emerges as horizontally polarised light which is blocked by the polariser 19, acting as an analyser, since its optical axis is vertical. This blocked light is the shape of the letter W which appears dark on a light background. The background is light for the following reason. Areas of the layer 8 not receiving an electric field i.e. those in register with electrode 10b, rotate the vertically polarised light from the polariser 18 into the second cell 2. In this cell 2 the horizontally polarised light is further rotated by $90^{o}$ to emerge as vertically polarised light which passes through the polariser 19.

From the above it follows that a light W can be displayed on a dark background by applying a voltage to electrodes 10b, and 11a, b.

Similarly (i) the letter X is displayed dark on a light background by applying voltages to electrodes 11a, and 10a and b together; (ii) X is displayed light on a dark background by applying to electrodes 11b and 10a, b; (iii) Y is displayed dark on a light background by applying voltages to electrodes 12a and 13a, b; (iv) Y is displayed light on a dark background by applying voltages to electrodes 12b, and 13a, b; (v) Z is displayed dark on a light background by applying voltages to electrodes 13a, and 12a, b; (vi) Z is displayed light on a dark background by applying voltages to electrodes 13b, and 12a, b.

All the above light and dark shades can be reversed by arranging the polariser 19 with its optical axis horizontal, i.e. crossed with respect to the polariser 18. In this case the whole display is dark in the completely OFF state; the whole display is light coloured when a voltage is applied to say electrodes 10a, b and 11a, b.

Pleochroic dyes may be added to the liquid crystal material and the device operated with a single polariser. One such dye or dye mixture is

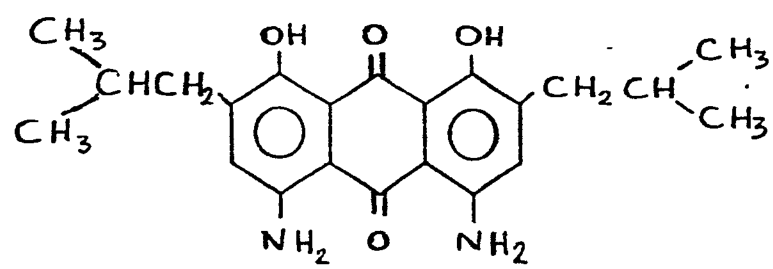

The above example of four different legends can be extended to six or more legends using three or more cells.

Figure 3 shows a three colour display similar in construction to that of Figure 1. It comprises two nematic liquid crystal cells 31, 32 containing two layers 38, 39 of positive nematic liquid material, e.g. E7, between three glass slides 33, 34, 35 spaced apart by spacers 36, 37. Typically the layer 38, 39 thickness is 12 µm. Electrode structures 10a, b, 11a, b, 12a, b, 13a, b, are formed on the slides as in Figures 2a, b, c, d. A polariser 40 is arranged in front of the device and a reflector 41 is arranged behind the device. For a reflective mode device the reflector may be metallic and a lambertian scattering surface. For the transmissive mode a light bulb 42 is arranged behind the reflector. The display may be seen by an observer 43 in a transmissive mode, with the bulb 42 lit, or reflective mode by reflection of ambient light.

Prior to assembly the slides are surface treated to give a liquid crystal molecular alignment, e.g. by rubbing with a soft tissue. In this example however all surface alignment directions, indicated by arrows 44, 45, 46, 47, are vertical in the assembled device; there is no rotation of plane polarised light through the device. Such as display is known as a Freederickz effect device.

Different colour dyes are dissolved in the liquid crystal material 38, 39. For example 2% of a yellow dye may be in layer 38 and 1% of a blue dye in layer 39. This allows the display of colours yellow, or blue, or green, or white.

The yellow dye may have the structure:

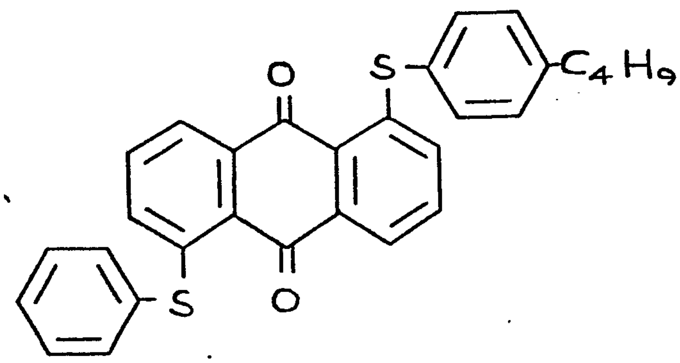

The blue dye may have the structure:-

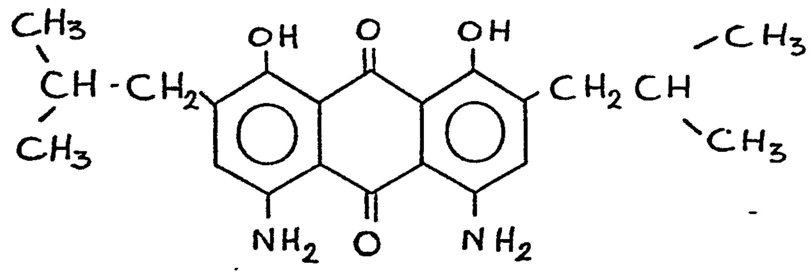

Pleochroic dye molecules absorb the component of light that is along their axis but do not absorb the component perpendicular to their axis. The dyes are chosen so that they are aligned with and by the liquid crystal molecules, the known guest-host effect. Thus a layer of liquid crystal material can be switched between a colour absorbing OFF state (molecules parallel to slides) and a non-absorbing ON state (molecules perpendicular to slides) state as the molecules of liquid crystal are electrically re-ordered.

In operation the device of Figure 3 displays the legends W, X, Y, Z, separately either by reflection of ambient light or transmission of light from the bulb 42.

The OFF state appearance of the device is a green colour. Light is horizontally polarised by polariser 40 and is selectively absorbed in passing through the layers 38, 39, twice. The layer 38 passes yellow light and the layer 39 passes blue light so the observed colour is a mixture of both yellow and blue i.e. green. If the whole of one cell 38 or 39 is turned ON it no longer selectively absorbs light and the observed colour is that of the unselected cell. Thus yellow is observed when cell 39 is fully ON and blue is observed when cell 38 is full ON. When both cells 38, 39 are fully ON no light is selectively absorbed and the display appears white, or the colour of the reflector 41. With appropriate application of voltages to the electrodes the legends W, X, Y, Z can be displayed in blue, yellow, green, or white on a different coloured background.

When operating in a transmissive mode light is emitted by the bulb 42 to the observer 43. Since the polariser only passes horizontally polarised light other components, e.g. vertical polarisation, can be ignored. The horizontally polarised component of light from the bulk is selectively absorbed as described above for a reflective mode operation. This allows the device to operate by reflection in high ambient light with use of the back light 42 in low ambient light.

To display the letter W coloured blue on a green background voltages are applied to electrode 10a, and 11a, b. This causes the molecules under the letter W electrode 10a to be re-ordered parallel to the applied field, elsewhere the molecules are aligned parallel to the layer thickness and the optical axis of the polariser 40. Horizontally polarised light from the polarisers 40 passes through the volume of liquid crystal under electrode 10a without absorption but is absorbed except for the blue component in the layer 39. The process is repeated as this light reflects back through the cells 32, 31. Thus the letter W appears blue. Light passing through the volume of liquid crystal in register with the electrode 10b is partly absorbed in the layer 38 and partly in the layer 39 on its double passage to and from the reflector 41. The observed colour is green.

Alternatively a green coloured W on a blue background is obtained by applying voltages to electrodes 10b, and 11a, b.

In the above the area of display corresponding to the selected electrode appeared blue. This area appears white (or the colour of the reflector 41) when a voltage is applied to electrodes 12a, b, and 13a, b. In this condition the whole layer 39 and the area under the selected electrode 10a or 10b absorbs little light.

Similarly the letter X may appear blue on a green background, green on a blue background, yellow or a white background, or white on a yellow background. Also the letters Y and Z may appear separately as yellow on a green background, green on a yellow background, blue on a white background, or white on a blue background.

0081308

In another form of the invention the nematic material of Figure 3 is replaced by a cholesteric liquid crystal material e.g. of 3 µm pitch i.e. a phase change device. The material may be E43 or E7 + ~ 5% by weight of CB 15. Yellow, and blue dyes are dissolved in the liquid crystal as before. No polariser 40 and no cell alignment treatment is required.

The cells 31, 32 each selectively absorb light as before so that in the OFF state the device appearance is green. When a cell 38 or 39 is fully ON its molecules lie perpendicular to the slides and no light is selectively absorbed. As before the legends W, X, Y, Z are displayed in a colour on a background of a different colour.

Claims

1. A liquid crystal device comprising a layer of a liquid crystal material (8, or 9, or 31, or 32) contained between two slides (3, 4 or 4, 5 or 33, 34 or 34, 35), at least one of which is transparent, and electrode structures (10, 11 or 12, 13 or 10, 11 or 12, 13) characterised by at least one fixed legend electrode (10a or 11a or 12a or 13a) and a background electrode (10b or 11b or 12b or 13b) on at least one slide (3 or 4 or 5 or 6) spaced sufficiently chose that collectively they may act as a single electrode or invididually as shaped electrodes.

2. The device of claim 1 characterised by at least one fixed legend electrode (10a or 12a) and a background electrode (10b or 12b) on one slide (3 or 4) and at least one different fixed legend electrode (11a or 13a) and background electrode (11b or 13b) on the other slide (4 or 5).

3. The device of claim 1 or 2 characterised by two or more devices (1, 2 or 31, 32) optically arranged in series so that four or more different fixed legends (W, X, Y, Z) may be observed.

4. The device of claims 1 or 2 characterised by a small amount of a dichroic dye dissolved in the liquid crystal material (8, 9 or 38, 39).

5. The device of any one of claims 1 to 3 characterised by a reflector arranged behind the cell.

6. The device of any one of claims 1 to 4 characterised by a gap between a fixed electrode and a background of less than 100 µm.

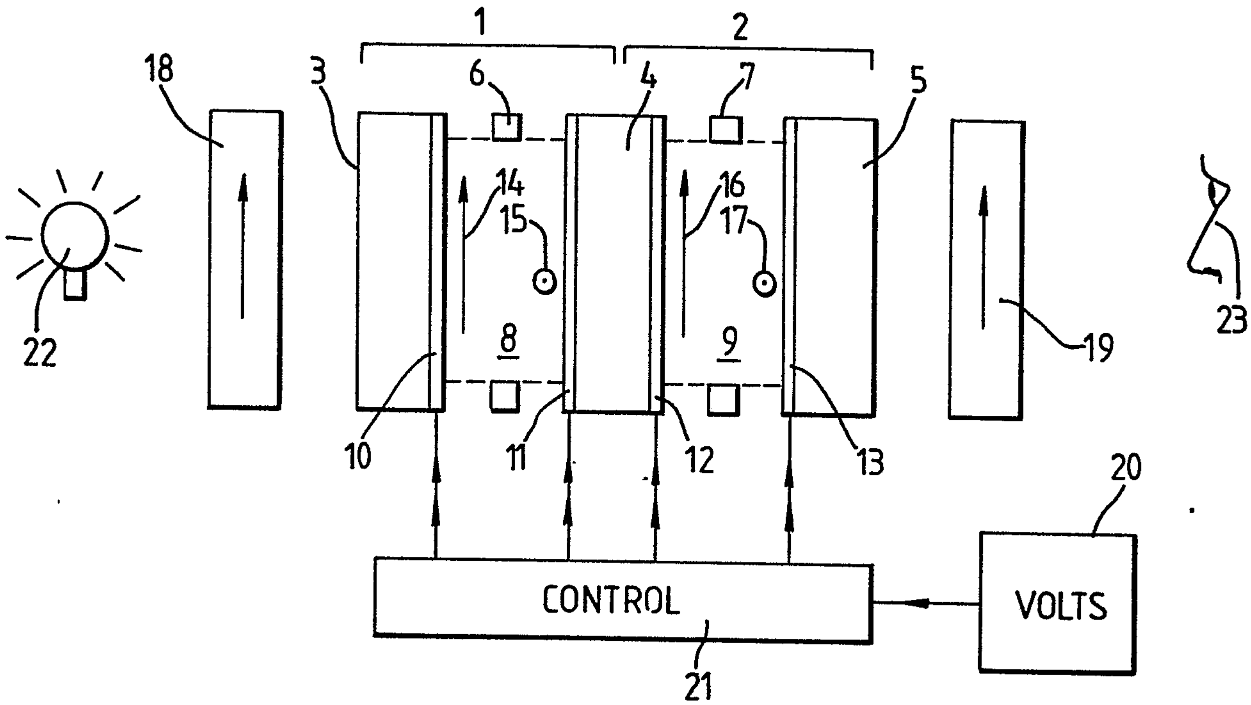
1
2
18
3
6
4
7
5
14
15
16
17
8
9
22
23
19
10
11
12
13
20
CONTROL
VOLTS
21

Fig. 1

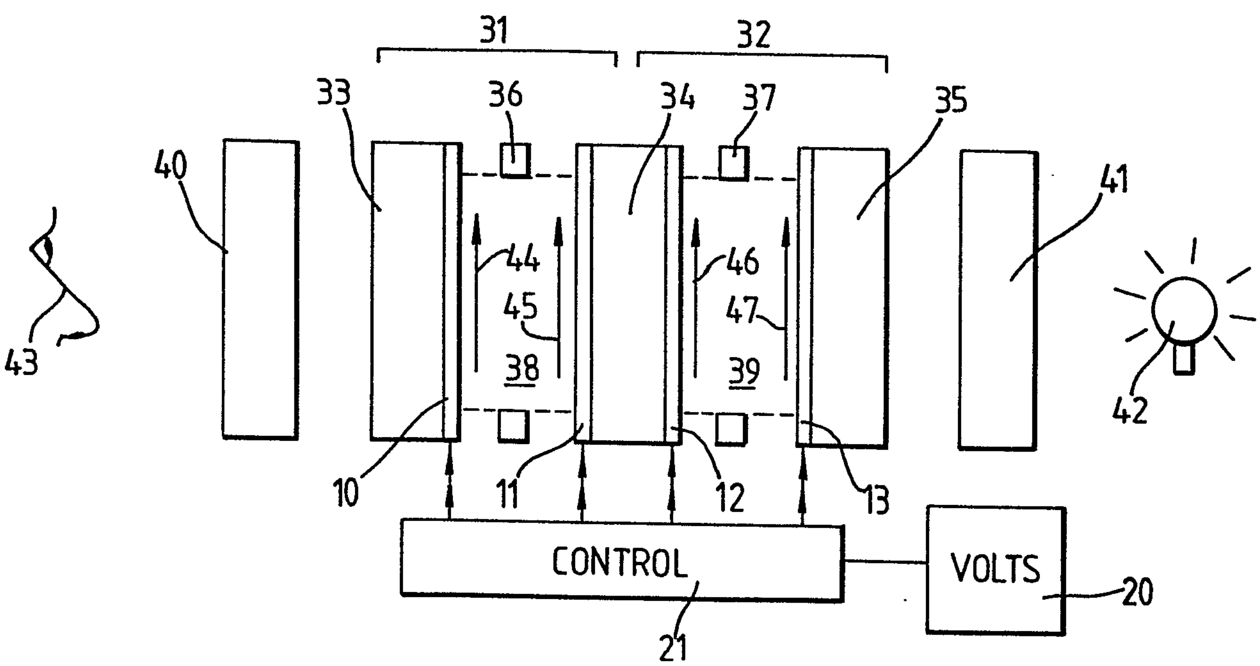
31
32
33
36
34
37
35
40
41
44
45
46
47
38
39
43
42
10
11
12
13
CONTROL
VOLTS
20
21

Fig. 3

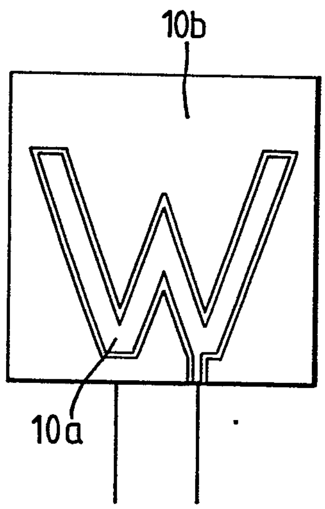


Fig.2a

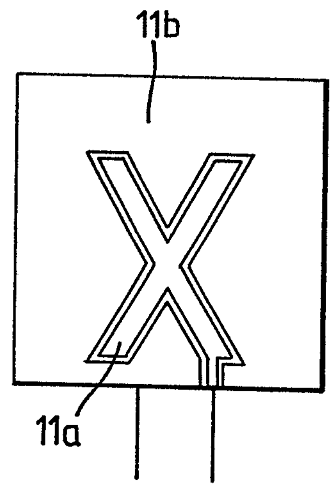


Fig.2b

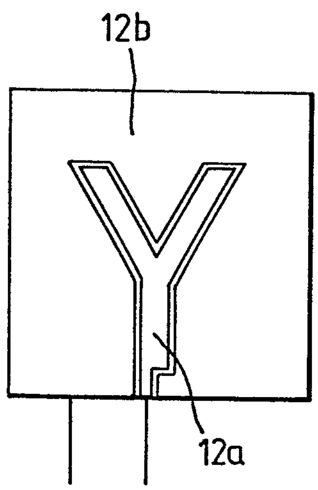


Fig. 2c

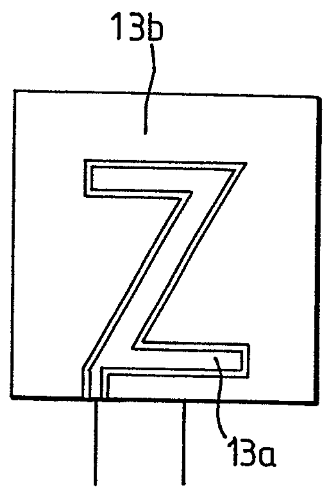


Fig. 2d

European Patent Office

# EUROPEAN SEARCH REPORT

0081308

Application number

EP 82306128.8

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. 3) |
| X | US - A - 4 277 786 (WALDRON)<br>* Fig. 1a,8,2a-d,5; column 2, line 38 - column 4, line 46; column 7, line 28 - column 8, line 8 *<br>-- | 1,2,4, 6 | G 02 F 1/133 |
| A | US - A - 4 294 516 (BROOKS)<br>* Fig. 1,2; column 5, line 33 - column 7, line 31 *<br>-- | 3,5 | |
| A | US - A - 4 211 473 (SHANKS)<br>* Fig. 4,5; column 7, line 40 - column 9, line 37 *<br>-- | 4,5 | |
| A,D | SID 80 DIGEST, 18.3/3:10 P.M.,<br>W. WALDTRON, S. AFTERGUT, H. COLE "A Multinode Touch-Entry Dichroic Liquid Crystal Display" pages 194-195<br>-- | 1,3 | TECHNICAL FIELDS SEARCHED (Int. Cl. 3)<br>G 02 F 1/00 |
| A | FR - A1 - 2 480 952 (ASULAB)<br>* Fig.; page 3, line 29 - page 10, line 19 *<br>---- | | |

The present search report has been drawn up for all claims

| Place of search | Date of completion of the search | Examiner |
|---|---|---|
| VIENNA | 28-02-1983 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82